# EUROPÄISCHE PATENTSCHRIFT

(11) **EP 3 842 592 B1**
(45) Veröffentlichungstag und Bekanntmachung des Hinweises auf die Patenterteilung: **05.07.2023**
(21) Anmeldenummer: 20212789.0
(22) Anmeldetag: 09.12.2020
(51) Int. Cl.: E01C 23/088, E01C 23/12, E01C 21/00, E21C 31/02, B28D 1/18, B28D 7/00, E02F 3/78, E02F 3/815, B62D 7/04

(54) **SELBSTFAHRENDE BAUMASCHINE**
SELF-PROPELLED CONSTRUCTION VEHICLE
ENGIN DE CONSTRUCTION AUTOMOBILE

(30) Priorität: 23.12.2019 DE 102019220552
(43) Veröffentlichungstag der Anmeldung: 30.06.2021
(73) Patentinhaber: Wirtgen GmbH, 53578 Windhagen (DE)
(72) Erfinder: Stinner, Tobias, 57645 Nister (DE); Drumm, Sebastian, 51503 Rösrath (DE); Frank, Burkhard, 53560 Vettelschoss (DE)
(74) Vertreter: dompatent von Kreisler Selting Werner - Partnerschaft von Patent- und Rechtsanwälten mbB

(56) Entgegenhaltungen:
- EP-A1- 0 916 004
- US-A1- 2013 000 996

## Beschreibung

Die Erfindung betrifft eine selbstfahrende Baumaschine nach dem Oberbegriff des Anspruchs 1, sowie ein Verfahren zum Bearbeiten von Bodenbelägen nach dem Oberbegriff des Anspruchs 11, wie z.B. aus der US2013000996A1 bekannt ist.

Es sind selbstfahrende Baumaschinen, insbesondere Straßenfräsmaschinen bekannt, die einen Maschinenrahmen und zumindest drei Fahreinrichtungen aufweisen, wobei zumindest eine der drei Fahreinrichtungen als schwenkbare Fahreinrichtung ausgeführt ist, so dass diese um eine vertikale Schwenkachse gegenüber dem Maschinenrahmen zwischen einer ersten eingeschwenkten und wenigstens einer zweiten ausgeschwenkten Position verschwenkbar ist. Ferner weist eine solche selbstfahrende Baumaschine zumindest eine Arbeitseinrichtung, insbesondere eine Fräswalze, zum Bearbeiten des Bodenbelags auf. Zum Antreiben der Fahreinrichtung ist häufig zumindest ein hydraulisches Antriebssystem vorgesehen.

Die Arbeitseinrichtung kann auf einer Seite des Maschinenrahmens, nämlich der sogenannten Nullseite des Maschinenrahmens, bündig mit diesem abschließen, wobei die schwenkbare Fahreinrichtung vorzugsweise an dieser Nullseite des Maschinenrahmens angeordnet ist und wobei die schwenkbare Fahreinrichtung zwischen einer ersten eingeschwenkten, nicht gegenüber der Nullseite hervorstehenden Position und wenigstens einer zweiten ausgeschwenkten, gegenüber der Nullseite hervorstehenden Position verschwenkbar ist. Die schwenkbare Fahreinrichtung kann vorzugsweise eine hintere Fahreinrichtung sein.

Soll die Arbeitseinrichtung beispielsweise kantennah an einer Hauswand oder einem ähnlichen Hindernis fräsen wird durch das Verschwenken der schwenkbaren Fahreinrichtung in die erste eingeschwenkte Position, vorzugsweise vor die Arbeitseirichtung, erreicht, dass die Baumaschine deutlich näher an das Hindernis heranfahren kann als es der Fall wäre, wenn die Fahreinrichtung neben Arbeitseinrichtung angeordnet wäre. Andererseits ist es beim nicht-kantennahen Fräsen wünschenswert, wenn die Fahreinrichtung neben der Arbeitseinrichtung angeordnet ist, um eine möglichst stabile Abstützung der Maschine zu erreichen.

Problematisch bei den oben beschriebenen Baumaschinen, bei denen zumindest eine Fahreinrichtung schwenkbar ausgeführt ist, ist, dass Teile der Maschine, insbesondere Teile des hydraulischen Antriebssystems an der schwenkbaren Fahreinrichtung, ganz besonders der Hydraulikmotor dieses Fahrwerks, keinen zu großen Bauraum beanspruchen dürfen, insbesondere sich möglichst wenig über die seitliche Breite der Fahreinrichtungen hinaus erstrecken sollen, da sich die Teile sonst bei eingeschwenkter Fahreinrichtung über die übrigen Seitenteile der Baumaschine auf der Nullseite hinaus erstrecken und somit ein kantennahes Fräsen verhindern würden.

Aus diesem Grund wurden im Stand der Technik bei Baumaschinen mit schwenkbaren Fahreinrichtungen bei einem hydraulischen Antriebssystem an allen angetriebenen Fahreinrichtungen hydraulische Konstantmotoren verwendet, da diese einen geringeren Bauraum aufweisen als hydraulische Verstellmotoren.

Die bisher verwendeten hydraulischen Antriebssysteme weisen eine hydraulische Verstellpumpe und einen hydraulischen Mengenteiler auf, der gewährleistet, dass jeder Motor mit der gleichen Drehzahl angetrieben wird.

Es besteht jedoch das Problem, dass bei einzelnen Fahreinrichtungen ein Schlupf auftreten kann, dem mit dem beschriebenen hydraulischen Antriebssystem nicht effektiv entgegengewirkt werden kann, insbesondere kann die Drehzahl der Fahreinrichtungen nur gemeinsam verstellt und nicht individuell angepasst werden, wie dies beispielsweise für die Einstellung eines Drehzahlunterschiedes zwischen kurveninneren und -äußeren Fahreinrichtungen wünschenswert wäre.

Auch eine getrennte Verstellung des Antriebsmomentes der Fahreinrichtungen ist nicht möglich.

Aufgabe der vorliegenden Erfindung ist es daher, bei einer selbstfahrenden Baumaschine mit verschwenkbarer Fahreinrichtung den Antrieb der Fahreinrichtungen zu verbessern.

Gelöst wird diese Aufgabe durch die Merkmale der Ansprüche 1 und 11.

Die Erfindung sieht in vorteilhafter Weise vor, dass das hydraulische Antriebssystem in den dem hydraulischem Konstantmotor zugeordneten Versorgungsleitungen ein regelbares Ventil aufweist, wobei das regelbare Ventil ein Drosselventil oder ein Volumenstromregelventil ist.

Der hydraulische Verstellmotor kann auch als regelbarer Hydraulikmotor bezeichnet werden. Ein hydraulischer Verstellmotor oder auch regelbarer Hydraulikmotor ist ein Hydraulikmotor oder Hydromotor, der durch eine Druckflüssigkeit angetrieben wird und bei gleichbleibendem Volumenstrom und gleichbleibendem Druck der Hydraulikflüssigkeit, insbesondere in der dem jeweiligen hydraulischen Verstellmotor zugeordneten hydraulischen Versorgungsleitung, in der Drehzahl verstellbar ist.

Der hydraulische Konstantmotor kann auch als nicht-regelbarer Hydraulikmotor bezeichnet werden. Ein hydraulischer Konstantmotor oder auch nicht-regelbarer Hydraulikmotor ist ein Hydraulikmotor oder Hydromotor, der durch eine Druckflüssigkeit angetrieben wird und eine konstante Drehzahl aufweist bzw. bei gleichbleibendem Volumenstrom und gleichbleibendem Druck der Hydraulikflüssigkeit, insbesondere in der dem jeweiligen hydraulischen Konstantmotor zugeordneten hydraulischen Versorgungsleitung, in der Drehzahl nicht verstellbar ist.

Das hydraulische Antriebssystem weist eine hydraulische Pumpe, insbesondere eine hydraulische Verstellpumpe auf. Ferner kann das hydraulische Antriebssystem auch eine Hydraulikreservoir aufweisen. Bei einem geschlossen Hyrdraulickreislauf wird die Hydraulikflüssigkeit kontinuierlich von der Pumpe über den Motor und wieder zurück gepumpt, bei einem offenen Hydraulikkreislauf fließt die Hydraulikflüssigkeit von dem Hydraulikmotor in ein Hydraulikreservoir aus dem die Pumpe die Hydraulikflüssigkeit wieder ansaugt.

Die einem hydraulischen Verstell- oder Konstantmotor zugeordneten hydraulischen Versorgungsleitungen sind jeweils die hydraulischen Leitungen in dem hydraulischen Antriebssystem, die von der hydraulischen Pumpe zu dem jeweiligen Verstell- oder Konstantmotor laufen oder auch von dem jeweiligen Verstell- oder Konstantmotor weg zurück zur hydraulischen Pumpe oder zu einem Hydraulikreservoir laufen.

Gemäß der vorliegenden Erfindung weisen alle angetriebenen Fahreinrichtungen außer der verschwenkbaren Fahreinrichtung einen hydraulischen Verstellmotor auf, mit denen an den jeweiligen Fahreinrichtungen eine genaue Einstellung der Drehzahl und damit z.B. eine Antriebs-Schupf-Regelung möglich ist. Um den Schlupf zu reduzieren, können die jeweiligen Fahreinrichtungen über die hydraulischen Verstellmotoren einzeln angesteuert werden.

Die Steuerung kann in einem Ausführungsbeispiel darüber erfolgen, dass die hydraulischen Verstellmotoren und die Verstellpumpe koordiniert so verstellt werden, dass sich sowohl an den Verstellmotoren, als auch an dem Konstantmotor die erwünschte Drehzahl einstellt.

Das hydraulische Antriebssystem weist in den dem hydraulischem Konstantmotor zugeordneten Versorgungsleitungen ein regelbares Ventil auf.

Hierbei ist das Ventil dazu vorgesehen den Druck und/oder den Volumenstrom in den Versorgungsleitungen des Konstantmotors anzupassen.

Hierbei kann insbesondere über eine Anpassung des Drucks das Moment des Motors oder mit einer Änderung des Volumenstroms die Drehzahl des Motors angepasst werden.

Mit Hilfe des regelbaren Ventils kann auch der hydraulische Konstantmotor angesteuert werden. Der Volumenstrom oder der Druck kann mit Hilfe des Ventils verändert werden, wodurch die Drehzahl oder das Drehmoment des hydraulischen Konstantmotors verändert werden können. Auf diese Weise kann ein ähnliches Verhalten wie bei einem hydraulischen Verstellmotor an der schwenkbaren Fahreinrichtung erreicht werden. Es kann beispielsweise eine Antriebs-Schlupf-Regelung durchgeführt werden. Der Konstantmotor an sich ist jedoch nicht verstellbar.

Das regelbare Ventil kann an der schwenkbaren Fahreinrichtung angeordnet sein. Alternativ kann das regelbare Ventil am Maschinenrahmen angeordnet sein.

Es können vorzugsweise vier Fahreinrichtungen vorgesehen sein, die alle mittels des hydraulischen Antriebssystems antreibbar sind. Es kann vorzugsweise eine der vier Fahreinrichtungen die schwenkbare Fahreinrichtung sein.

Die hydraulischen Verstellmotoren können jeweils an den jeweiligen angetriebenen Fahreinrichtungen angeordnet sein.

Die hydraulischen Verstellmotoren können grundsätzlich in bekannter Weise ausgeführt und z. B. als Radialkolbenmotoren ausgebildet werden, besonders bevorzugt können hydraulisch verstellbare Axialkolbenmotoren vorgesehen sein. Als hydraulische Pumpe können die aus dem Stand der Technik bekannten Pumpen, wie z. B. Radialkolbenpumpen verwendet werden, besonders bevorzugt wird eine hydraulische Axialkolbenpumpe verwendet.

Die Fahreinrichtungen können lenkbar sein. Die Fahreinrichtungen können jeweils um eine Lenkachse lenkbar sein. Die Lenkachse verläuft vorzugsweise vertikal durch die Fahreinrichtung, wobei diese Achse insbesondere mittig durch die Fahreinrichtung verläuft.

Auch die schwenkbare Fahreinrichtung kann um eine Lenkachse lenkbar sein, wobei die vertikale Schwenkachse gegenüber der Lenkachse versetzt sein kann.

Gemäß der vorliegenden Erfindung kann auch ein Verfahren zum Bearbeiten von Bodenbelägen mit einer mit Hilfe von zumindest drei Fahreinrichtungen selbstfahrenden Baumaschine mit einem Maschinenrahmen, insbesondere Straßenfräsmaschine, vorgesehen sein, wobei bei der Baumaschine eine Arbeitseinrichtung, insbesondere eine Fräswalze, den Bodenbelag bearbeitet und bei der zumindest eine der drei Fahreinrichtungen als schwenkbare Fahreinrichtung ausgeführt ist, die um mindestens eine vertikale Schwenkachse gegenüber dem Maschinenrahmen zwischen einer ersten eingeschwenkten und wenigstens einer zweiten ausgeschwenkten Position verschwenkt werden kann, wobei zumindest zwei Fahreinrichtungen von einem hydraulischen Antriebssystem angetrieben werden, wobei das hydraulische Antriebssystem zumindest eine hydraulische Pumpe aufweist, und wobei zumindest eine der mindestens zwei angetriebenen Fahreinrichtungen die schwenkbare Fahreinrichtung ist, wobei alle angetriebenen Fahreinrichtungen außer der zumindest einen schwenkbaren Fahreinrichtung jeweils über einen hydraulischen Verstellmotor angetrieben werden, und die zumindest eine schwenkbare Fahreinrichtung über einen hydraulischen Konstantmotor angetrieben wird.

Erfindungsgemäß ist in vorteilhafter Weise vorgesehen, dass der hydraulische Konstantmotor (74) über ein regelbares Ventil (76) angesteuert wird, wobei das regelbare Ventil ein Drosselventil oder ein Volumenstromregelventil ist.

Wie bereits erläutert, hat dies den Vorteil, dass der hydraulische Konstantmotor über das Ventil derart angesteuert werden kann, dass ein ähnliches Verhalten wie bei einem Verstellmotor erreicht werden kann und so beispielsweise eine Antriebs-Schlupf-Regelung erfolgen kann.

Das regelbare Ventil kann an dem Maschinenrahmen angeordnet sein.

Alternativ kann das regelbare Ventil an der schwenkbaren Fahreinrichtung angeordnet werden.

Im Folgenden werden unter Bezugnahme auf die Zeichnungen Ausführungsbeispiele der Erfindung näher erläutert.

Es zeigen schematisch:
- Fig. 1: eine erfindungsgemäße Baumaschine,
- Fig. 2: eine Draufsicht auf die erfindungsgemäße Baumaschine,
- Fig. 3: Antriebsstränge der Baumaschine,
- Fig. 4: eine schematische Übersicht über das hydraulische Antriebssystem,
- Fig.5a-5c: Bewegung der verschwenkbaren Fahreinrichtung.

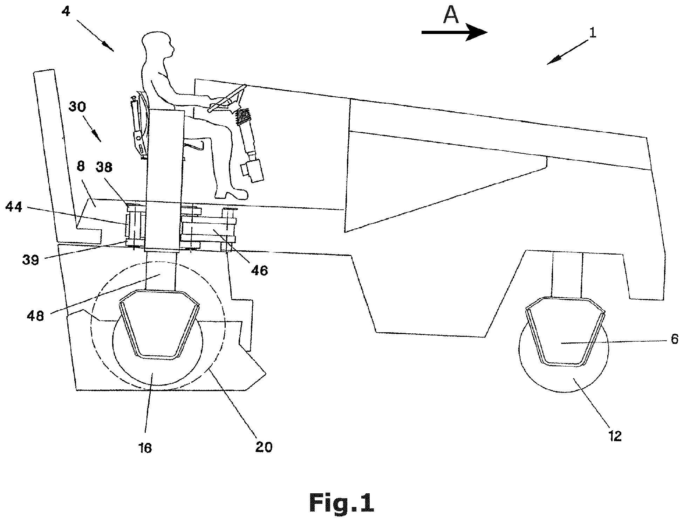

Fig. 1 zeigt eine selbstfahrende Baumaschine 1. Im dargestellten Ausführungsbeispiel ist die selbstfahrende Baumaschine eine Straßenfräsmaschine. Die Baumaschine 1 weist einen Maschinenrahmen 8 auf und zumindest drei Fahreinrichtungen 12, 16. Die dargestellte Baumaschine 1 weist zwei vordere 12 und zwei hintere 12, 16 Fahreinrichtungen auf, von denen in Fig.1 die jeweils in Arbeitsrichtung A links angeordneten Laufwerke nicht sichtbar sind. Die Fahreinrichtungen können, wie im dargestellten Ausführungsbeispiel, Räder oder alternativ auch Kettenlaufwerke sein.

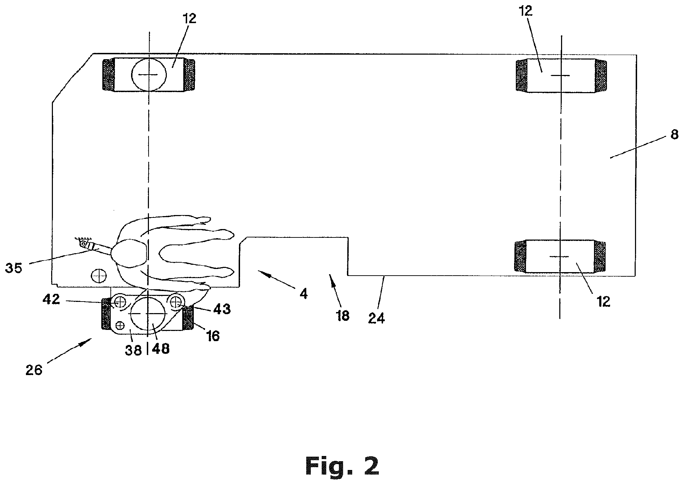

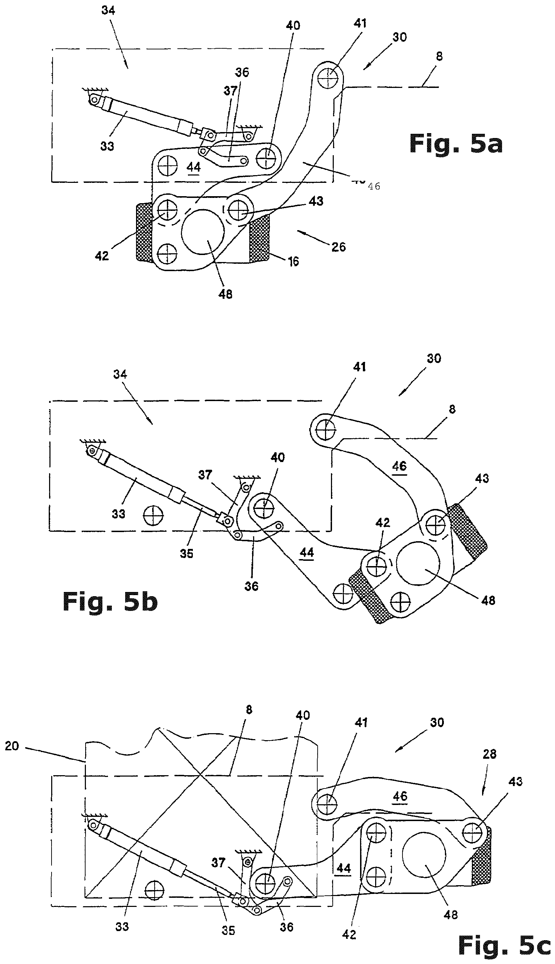

Die Fahreinrichtungen 12, 16 können jeweils mittels zumindest eines hydraulischen Antriebssystems 70 angetrieben sein. Bei einer Baumaschine 1 können zumindest zwei Fahreinrichtungen angetrieben sein, wobei beispielsweise die vorderen Fahreinrichtungen 12 auch nicht angetrieben sein können. Zumindest eine der mindestens drei Fahreinrichtungen 12, 16 ist als schwenkbare Fahreinrichtung 16 ausgeführt. Diese kann um mindestens eine vertikale Schwenkachse gegenüber dem Maschinenrahmen 8 zwischen einer ersten eingeschwenkten und wenigstens einer zweiten ausgeschwenkten Position verschwenkbar sein. Dies wird anhand der Fign. 2 und 5 a-c näher erläutert.

Ferner ist zumindest eine Arbeitseinrichtung 20 vorgesehen, die wie im dargestellten Ausführungsbeispiel eine Fräswalze sein kann, um den Bodenbelag 3 zu bearbeiten. Auch die zumindest eine schwenkbare Fahreinrichtung 16 kann mittels des hydraulischen Antriebssystems 70 antreibbar sein. Wie Fig. 2 zu entnehmen ist, weist die Baumaschine 1 eine sogenannte Nullseite 24 auf. Die Arbeitseinrichtung 20 ist mit ihrer einen Stirnseite nahezu bündig mit der Nullseite 24 des Maschinenrahmens 8 angeordnet, so dass auf der Nullseite der Baumaschine 1 ein kantennahes Arbeiten möglich ist. Hierzu wird die schwenkbare Fahreinrichtung 16 aus der in Fig. 2 dargestellten ausgeschwenkten Position 26 jenseits der Nullseitenebene nach innen in einer Aussparung 18 des Maschinenrahmens 8 eingeschwenkt, so dass die Außenkante der schwenkbaren Fahreinrichtung bündig mit der Nullseite 24 abschließen kann.

Die Schwenkeinrichtung für die schwenkbare Fahreinrichtung 16 kann ein Lenkergetriebe 30 aufweisen. Das Lenkergetriebe kann beispielsweise, wie dargestellt, vier vertikale Gelenkachsen aufweisende Gelenke 40, 41, 42, 43 und mit zwei in einer horizontalen Ebene verschwenkbaren Lenkern 44, 46 ausgebildet sein. Zwei Gelenke 40, 41 können ortsfest an dem Maschinenrahmen 8 und zwei Gelenke 42, 43 können an der schwenkbaren Fahreinrichtung 16 jeweils in zwei vertikale beabstandeten Tragplatten 38, 39 vorgesehen sein.

Die schwenkbare Fahreinrichtung kann auch in mehr als eine äußere ausgeschwenkte Position verschwenkbar sein.

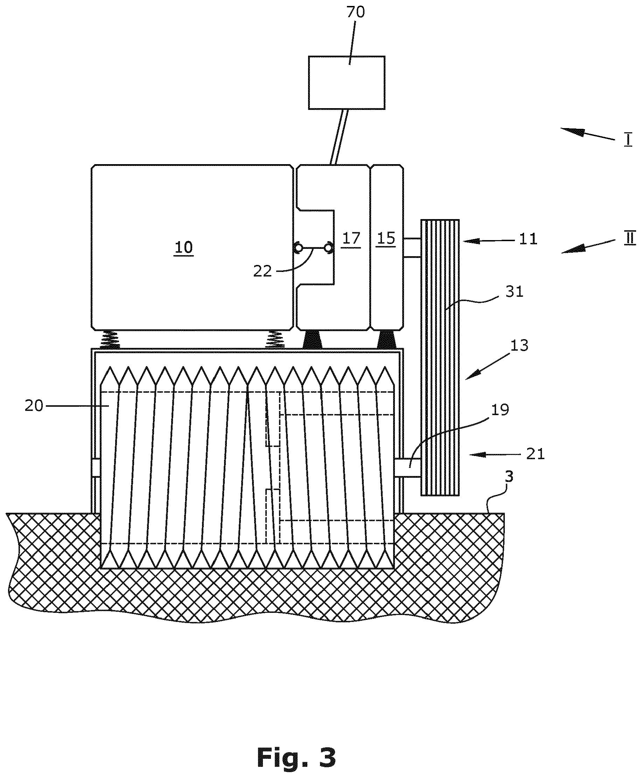

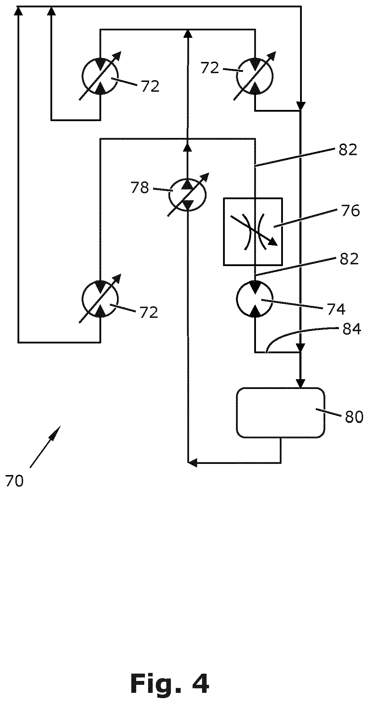

Fig. 3 zeigt einen Antriebsstrang der Baumaschine 1. Zur Übertragung der Antriebsleistung auf die Fahreinrichtungen 12, 16 dient ein erster Antriebsstrang I. Dieser umfasst ein hydraulisches Antriebssystem 70. Zur Übertragung der Antriebsleistung auf die Fräswalze 20 ist ein zweiter Antriebsstrang II vorgesehen. Der hydraulische Antriebsstrang 70 wird in der Fig. 4 näher erläutert. In der Fig. 3 ist der Antriebsstrang II zum Antrieb der Fräswalze 20 näher dargestellt. Es kann ein Antriebsmotor, insbesondere ein Verbrennungsmotor 10 vorgesehen sein. Der Antriebsmotor 10 kann über eine flexible Verbindung 22 mit einem Pumpenverteilgetriebe 17 zum Antreiben des ersten Antriebsstrangs I zum Antreiben eines hydraulischen Antriebssystems 70 zum Antreiben der Fahreinrichtung 12, 16 vorgesehen sein.

Im zweiten Antriebsstrang II zum Antreiben der Fräswalze 20 kann zwischen dem Antriebsmotor 10 und der Fräswalze 20 eine Schaltkupplung 15 vorgesehen sein. Die Schaltkupplung 15 kann eine Einrichtung zum Schalten des Drehmoments sein.

Zwischen der Schaltkupplung 15 und der Fräswalze 20 kann ein Zugmittelgetriebe 13 für den mechanischen Antrieb der Fräswalze 20 angeordnet sein. Das Zugmittelgetriebe 13 weist ein Antriebselement 11 auf, das mit der Antriebswelle 23 des Antriebsmotors 10 drehfest gekoppelt ist. Ferner weist das Zugmittelgetriebe 13 ein Antriebselement 21 auf, das mit der Antriebswelle 19 der Fräswalze 20 drehfest gekoppelt ist. Zwischen Antriebswelle 19 und der Fräswalze 20 kann auch ein Getriebe angeordnet sein.

Das Zugmittelgetriebe 13 ist vorzugsweise ein Riemenantrieb, wobei die Antriebs- und Abtriebselemente aus Riemenscheiben 11, 21 bestehen können, über die ein oder mehrere Antriebsriemen 31 laufen, wobei die Antriebs- und Abtriebselemente aus Ritzeln bestehen können. Grundsätzlich kann der Antriebsmotor auch hydraulisch oder elektrisch sein.

In Fig. 4 ist das hydraulische Antriebssystem 70 grobschematisch dargestellt. Dieses hydraulische Antriebssystem weist zumindest eine hydraulische Pumpe 78, vorzugsweise eine hydraulische Verstellpumpe auf.

Das hydraulische Antriebssystem 70 weist für jede angetriebene Fahreinrichtung 12 außer der zumindest einen schwenkbaren Fahreinrichtung 16 jeweils einen hydraulischen Verstellmotor 72 auf. Die hydraulischen Verstellmotoren sind jeweils vorzugsweise an den jeweiligen Fahreinrichtungen 12 angeordnet. Ferner kann das hydraulische Antriebssystem ein Hydraulikreservoir 80 aufweisen.

Zum Antreiben der zumindest einen schwenkbaren Fahreinrichtung 16 ist ein hydraulischer Konstantmotor 74 vorgesehen.

Ein hydraulischer Konstantmotor weist einen geringeren Bauraum auf als ein hydraulischer Verstellmotor.

In den dem hydraulischen Konstantmotor 74 zugeordneten Versorgungsleitungen 82, 84 ist im dargestellten Ausführungsbeispiel ein regelbares Ventil 76, insbesondere ein Drosselventil, angeordnet. Die einem hydraulischen Verstell- oder Konstantmotor zugeordneten hydraulischen Versorgungsleitungen sind jeweils die hydraulischen Leitungen in dem hydraulischen Antriebssystem 70, die von der hydraulischen Pumpe zu dem jeweiligen Verstell- oder Konstantmotor laufen oder auch von dem jeweiligen Verstell- oder Konstantmotor weg zu einem Hydraulikreservoir laufen. Die dem Konstantmotor im dargestellten Ausführungsbeispiel zugeordneten Versorgungsleitungen sind die Leitungen 82, 84. Die Versorgungsleitung 82 führt von der hydraulischen Pumpe 78 zu dem hydraulischen Konstantmotor 74. Die Versorgungsleitung 84 führt von dem Konstantmotor 74 zu dem Hydraulikreservoir 80. Im dargestellten Ausführungsbeispiel ist das regelbare Ventil 76 in der Versorgungsleitung 82 zwischen der hydraulischen Pumpe 78 und dem hydraulischen Konstantmotor 74 angeordnet.

Mittels des regelbaren Ventils 76 kann der hydraulische Konstantmotor 74 derart angesteuert werden, dass ein ähnliches Verhalten erreicht werden kann, wie bei einem hydraulischen Verstellmotor. Das als Drosselventil ausgeführte regelbare Ventil 76 ist vorzugsweise ein Proportionalventil. Über das Drosselventil kann der Druckabfall an dem Drosselventil und damit der Hydraulikdruck am Hydraulikmotor geändert werden, wodurch das Moment des Konstantmotors angepasst wird. Durch eine Reduzierung des Antriebsmomentes kann beispielsweise ein Durchdrehen der Fahreinrichtung verhindert werden.

Grundsätzlich ist es auch möglich mit einem Volumenstromregelventil anstelle eines Drosselventils den Volumenstrom zu Regeln und damit die Drehzahl des Hydraulikmotors und somit auch der Fahreinrichtung vorzugeben.

Die Fahreinrichtungen 12, 16 können Sensoren zur Ermittlung Drehgeschwindigkeiten an den Fahreinrichtungen vorgesehen sein. Dies können beispielsweise Pickup-Sensoren sein. Mittels der Sensoren kann festgestellt werden, ob ein Schlupf an der jeweiligen Fahreinrichtung 12, 16 vorliegt, insbesondere indem die Drehzahlen der Laufwerke miteinander verglichen werden. Falls ein Schlupf vorliegt, so kann dieser durch Ansteuern der einzelnen hydraulischen Verstellmotoren und/oder des Drosselventils reduziert werden.

In den Fig. 5a bis 5c ist noch einmal näher dargestellt, wie die schwenkbare Fahreinrichtung 16 verschwenkt werden kann. Die Fahreinrichtung 16 kann von einer zweiten ausgeschwenkten Position 26 in eine erste eingeschwenkte Position 28 mit Hilfe einer Antriebseinrichtung 34 bewegt werden. Es kann auch mehr als eine ausgeschwenkte Position existieren.

Die Antriebseinrichtung 34 besteht aus einer hydraulischen KolbenZylindereinheit 33 mit einer Schubstange 35 und zwei Lenkerarmen 36, 37. Der Lenkerarm 37 ist als zweiarmiger Hebel gestaltet, wobei das eine Ende an dem Maschinenrahmen 8 gelagert ist und das andere Ende mit dem zweiten Lenkerarm 36 gelenkig verbunden ist. Das andere Ende des zweiten Lenkerarms 36 ist mit dem Lenker 44 der Schwenkeinrichtung verbunden.

Die Schubstange 35 kann von dem Fahrzeugführer auf dem Fahrerstand 4 betätigt werden. In der eingezogenen Position der Schubstange 35 befindet sich die Fahreinrichtung 16 in der zweiten ausgeschwenkten Position, über der Nullseite 24 überstehend. Im ausgefahrenen Zustand der Schubstange 35 wird das Lenkergetriebe 30 verschwenkt, so dass die Fahreinrichtung 16 in die erste eingeschwenkte Position bewegt werden kann. Vor dem Schwenkvorgang kann die Fahreinrichtung 16 mit Hilfe der Hubsäule 48 angehoben werden, damit die Fahreinrichtung 16 ohne Bodenkontakt verschwenkt werden kann. In der ersten eingeschwenkten Position kann eine Arretierung des Lenkergetriebes 30 erfolgen. Prinzipiell sind auch andere Schwenkvorrichtungen bekannt bei denen das Verschwenken beispielsweise unter Beibehaltung des Bodenkontakts der Fahreinrichtung 16 erfolgen kann.

Die schwenkbare Fahreinrichtung 16 kann um vertikale Schwenkachsen 40, 41 verschwenkbar sein. Die vertikale Schwenkachse, um die die schwenkbare Fahreinrichtung verschwenkt werden kann, kann auch verschiebbar sein.

## Patentansprüche

1. Selbstfahrende Baumaschine (1), insbesondere Straßenfräsmaschine, mit
- einem Maschinenrahmen (8),
- zumindest drei Fahreinrichtungen (12, 16),
- wobei zumindest eine der drei Fahreinrichtungen (12, 16) als schwenkbare Fahreinrichtung (16) aufgeführt ist, so dass diese um mindestens eine vertikale Schwenkachse gegenüber dem Maschinenrahmen (8) zwischen einer ersten eingeschwenkten und wenigstens einer zweiten ausgeschwenkten Position verschwenkbar ist,
- zumindest einer Arbeitseinrichtung (20), insbesondere einer Fräswalze, zum Bearbeiten des Bodenbelags (3),
- zumindest einem hydraulischen Antriebssystem (70) zum Antreiben mindestens zweier Fahreinrichtungen (12, 16), wobei zumindest eine der mindestens zwei angetriebenen Fahreinrichtungen die schwenkbare Fahreinrichtung (16) ist, wobei das hydraulische Antriebssystem (70) zumindest eine hydraulische Pumpe (78) aufweist,
wobei das hydraulische Antriebssystem (70) jeweils einen hydraulischen Verstellmotor (72) zum Antreiben der angetriebenen Fahreinrichtungen (12) außer der zumindest einen schwenkbaren Fahreinrichtung (16) aufweist, wobei das hydraulische Antriebssystem (70) zum Antreiben der zumindest einen schwenkbaren Fahreinrichtung (16) einen hydraulischen Konstantmotor (74) aufweist,
**dadurch gekennzeichnet,**
**dass** das hydraulische Antriebssystem (70) in den dem hydraulischem Konstantmotor (74) zugeordneten Versorgungsleitungen (80, 82, 84) ein regelbares Ventil (76) aufweist, wobei das regelbare Ventil ein Drosselventil oder ein Volumenstromregelventil ist.

2. Baumaschine (1) nach Anspruch 1, **dadurch gekennzeichnet, dass** das regelbare Ventil (76) am Maschinenrahmen (8) angeordnet ist.

3. Baumaschine (1) nach Anspruch 1, **dadurch gekennzeichnet, dass** das regelbare Ventil (76) an der schwenkbaren Fahreinrichtung (16) angeordnet ist.

4. Baumaschine (1) nach einem der Ansprüche 1 bis 3, **dadurch gekennzeichnet, dass** vier Fahreinrichtungen (12, 16) vorgesehen sind, die alle mittels des hydraulischen Antriebssystems (70) antreibbar sind, wobei eine der vier Fahreinrichtungen (12, 16) die schwenkbare Fahreinrichtung (16) ist.

5. Baumaschine (1) nach einem der Ansprüche 1 bis 4, **dadurch gekennzeichnet, dass** die hydraulischen Verstellmotoren (72) an den jeweiligen angetriebenen Fahreinrichtungen (12) angeordnet sind.

6. Baumaschine (1) nach einem der Ansprüche 1 bis 5, **dadurch gekennzeichnet, dass** die hydraulischen Verstellmotoren (72) hydraulisch verstellbare Axialkolbenmotoren sind.

7. Baumaschine (1) nach einem der Ansprüche 1 bis 6, **dadurch gekennzeichnet, dass** die hydraulische Pumpe (78) eine hydraulische Axialkolbenpumpe ist.

8. Baumaschine (1) nach einem der Ansprüche 1 bis 7, **dadurch gekennzeichnet, dass** der hydraulische Konstantmotor (74) ein nicht verstellbarer Axialkolbenmotor ist.

9. Baumaschine (1) nach einem der Ansprüche 1 bis 8, **dadurch gekennzeichnet, dass** die schwenkbare Fahreinrichtung (16) um eine Lenkachse lenkbar ist und die vertikale Schwenkachse (40, 41) gegenüber der Lenkachse versetzt ist.

10. Baumaschine (1) nach einem der Ansprüche 1 bis 9, **dadurch gekennzeichnet, dass** die Arbeitseinrichtung (20) auf einer Seite des Maschinenrahmens (8), nämlich der sogenannten Nullseite (24) des Maschinenrahmens (8), bündig mit diesem abschließt, wobei die schwenkbare Fahreinrichtung (16) an dieser Nullseite (24) des Maschinenrahmens (8) angeordnet ist, wobei die schwenkbare Fahreinrichtung (16) zwischen der ersten eingeschwenkten, nicht gegenüber der Nullseite (24) hervorstehenden Position und wenigstens einer zweiten ausgeschwenkten, gegenüber der Nullseite (24) hervorstehenden Position verschwenkbar ist.

11. Verfahren zum Bearbeiten von Bodenbelägen mit einer mit Hilfe von zumindest drei Fahreinrichtungen (12,16) selbstfahrenden Baumaschine (1) mit einem Maschinenrahmen, insbesondere Straßenfräsmaschine, bei der eine Arbeitseinrichtung (20), insbesondere eine Fräswalze, den Bodenbelag (3) bearbeitet und bei der zumindest eine der drei Fahreinrichtungen (12, 16) als schwenkbare Fahreinrichtung (16) aufgeführt ist, die um mindestens eine vertikale Schwenkachse gegenüber dem Maschinenrahmen (8) zwischen einer ersten eingeschwenkten und wenigstens einer zweiten ausgeschwenkten Position verschwenkt werden kann, wobei zumindest zwei Fahreinrichtungen (12, 16) von einem hydraulischen Antriebssystem (70) angetrieben werden, wobei das hydraulische Antriebssystem (70) zumindest eine hydraulische Pumpe (78) aufweist und wobei zumindest eine der mindestens zwei angetriebenen Fahreinrichtungen die schwenkbare Fahreinrichtung (16) ist,
wobei alle angetriebenen Fahreinrichtungen (12) außer der zumindest einen schwenkbaren Fahreinrichtung (16) jeweils über einen hydraulischen Verstellmotor (72) angetrieben werden und die zumindest eine schwenkbare Fahreinrichtung (16) über einen hydraulischen Konstantmotor (74) angetrieben wird,
**dadurch gekennzeichnet,**
**dass** der hydraulische Konstantmotor (74) über ein regelbares Ventil (76) angesteuert wird, wobei das regelbare Ventil ein Drosselventil oder ein Volumenstromregelventil ist.

12. Verfahren nach Anspruch 11, **dadurch gekennzeichnet, dass** das regelbare Ventil (76) am Maschinenrahmen (8) angeordnet wird.

## Claims

1. A self-propelled construction machine (1), in particular a road milling machine, comprising
- a machine frame (8),
- at least three travelling devices (12, 16),
- wherein at least one of the three travelling devices (12, 16) is realized as a pivotable travelling device (16) so that said travelling device (16) is pivotable about at least one vertical pivoting axis in relation to the machine frame (8) between a first pivoted-in and at least one second pivoted-out position,
- at least one working device (20), in particular a milling drum, for working the ground pavement (3),
- at least one hydraulic drive system (70) for driving at least two travelling devices (12, 16), wherein at least one of the at least two driven travelling devices is the pivotable travelling device (16), wherein the hydraulic drive system (70) comprises at least one hydraulic pump (78),
wherein the hydraulic drive system (70) comprises respectively one hydraulic variable displacement motor (72) for driving the driven travelling devices (12) with the exception of the at least one pivotable travelling device (16), wherein the hydraulic drive system (70) comprises a hydraulic fixed displacement motor (74) for driving the at least one pivotable travelling device (16),
**characterized in that**
the hydraulic drive system (70) comprises a controllable valve (76) in the supply lines (80, 82, 84) assigned to the hydraulic fixed displacement motor (74), wherein the controllable valve is a throttle valve or a volumetric flow rate control valve.

2. The construction machine (1) in accordance with claim 1, **characterized in that** the controllable valve (76) is arranged on the machine frame (8).

3. The construction machine (1) in accordance with claim 1, **characterized in that** the controllable valve (76) is arranged on the pivotable travelling device (16).

4. The construction machine (1) in accordance with one of the claims 1 to 3, **characterized in that** four travelling devices (12, 16) are provided, all of which are drivable by means of the hydraulic drive system (70), wherein one of the four travelling devices (12, 16) is the pivotable travelling device (16).

5. The construction machine (1) in accordance with one of the claims 1 to 4, **characterized in that** the hydraulic variable displacement motors (72) are arranged on the respective driven travelling devices (12).

6. The construction machine (1) in accordance with one of the claims 1 to 5, **characterized in that** the hydraulic variable displacement motors (72) are hydraulically adjustable axial piston motors.

7. The construction machine (1) in accordance with one of the claims 1 to 6, **characterized in that** the hydraulic pump (78) is a hydraulic axial piston pump.

8. The construction machine (1) in accordance with one of the claims 1 to 7, **characterized in that** the hydraulic fixed displacement motor (74) is a non-adjustable axial piston motor.

9. The construction machine (1) in accordance with one of the claims 1 to 8, **characterized in that** the pivotable travelling device (16) is steerable about a steering axis and the vertical pivoting axis (40, 41) is offset in relation to the steering axis.

10. The construction machine (1) in accordance with one of the claims 1 to 9, **characterized in that**, on one side of the machine frame (8), namely, the so-called zero-clearance side (24) of the machine frame (8), the working device (20) terminates flush with the same, wherein the pivotable travelling device (16) is arranged on said zero-clearance side (24) of the machine frame (8), wherein the pivotable travelling device (16) is pivotable between the first pivoted-in position not projecting in relation to the zero-clearance side (24), and at least one second pivoted-out position projecting in relation to the zero-clearance side (24).

11. A method for working ground pavements using a construction machine (1) self-propelled by means of at least three travelling devices (12, 16), in particular road milling machine, in which a working device (20), in particular a milling drum, works the ground pavement (3), and in which at least one of the three travelling devices (12, 16) is realized as a pivotable travelling device (16), which may be pivoted about a vertical pivoting axis in relation to the machine frame (8) between a first pivoted-in and at least one second pivoted-out position, wherein at least two travelling devices (12, 16) are driven by a hydraulic drive system (70), wherein the hydraulic drive system (70) comprises at least one hydraulic pump (78), and wherein at least one of the at least two driven travelling devices is the pivotable travelling device (16), all driven travelling devices (12), with the exception of the at least one pivotable travelling device (16), are each driven via a hydraulic variable displacement motor (72), and the at least one pivotable travelling device (16) is driven via a hydraulic fixed displacement motor (74),
**characterized in that**
the hydraulic fixed displacement motor (74) is controlled via a controllable valve (76), wherein the controllable valve is a throttle valve or a volumetric flow rate control valve.

12. The method in accordance with claim 11, **characterized in that** the controllable valve (76) is arranged on the machine frame (8).

## Revendications

1. Engin de chantier automoteur (1), en particulier fraiseuse routière, doté
- d'un châssis de machine (8),
- d'au moins trois dispositifs de déplacement (12, 16),
- dans lequel au moins un des trois dispositifs de déplacement (12, 16) est réalisé comme dispositif de déplacement pivotant (16), de sorte que celui-ci peut pivoter autour d'au moins un axe de pivot vertical par rapport au châssis de machine (8) entre une première position rétractée et au moins une deuxième position déployée,
- d'au moins un dispositif de travail (20), en particulier un tambour de fraisage, pour traiter le revêtement de sol (3),
- d'au moins un système d'entraînement hydraulique (70) pour l'entraînement d'au moins deux dispositifs de déplacement (12, 16), dans lequel au moins un des au moins deux dispositifs de déplacement entraînés est le dispositif de déplacement pivotant (16), dans lequel le système d'entraînement hydraulique (70) comporte au moins une pompe hydraulique (78),
dans lequel le système d'entraînement hydraulique (70) comporte respectivement un servo-moteur hydraulique (72) pour l'entraînement des dispositifs de déplacement entraînés (12) à l'exception de l'au moins un dispositif de déplacement pivotant (16), dans lequel le système d'entraînement hydraulique (70) pour l'entraînement de l'au moins un dispositif de déplacement pivotant (16) comporte un moteur hydraulique à cylindrée constante (74),
**caractérisé**
**en ce que** le système d'entraînement hydraulique (70) comporte une vanne régulable (76) dans les conduites d'alimentation (80, 82, 84) associées au moteur hydraulique à cylindrée constante (74), dans lequel la vanne régulable est une vanne d'étranglement ou une vanne régulatrice de débit.

2. Engin de chantier (1) selon la revendication 1, **caractérisé en ce que** la vanne régulable (76) est disposée sur le châssis de machine (8).

3. Engin de chantier (1) selon la revendication 1, **caractérisé en ce que** la vanne régulable est disposée sur le dispositif de déplacement pivotant (16).

4. Engin de chantier (1) selon l'une des revendications 1 à 3, **caractérisé en ce que** quatre dispositifs de déplacement (12, 16) sont prévus, lesquels peuvent tous être entraînés au moyen du système d'entraînement hydraulique (70), dans lequel un des quatre dispositifs de déplacement (12, 16) est le dispositif de déplacement pivotant (16).

5. Engin de chantier (1) selon l'une des revendications 1 à 4, **caractérisé en ce que** les servomoteurs hydrauliques (72) sont disposés sur les dispositifs de déplacement (12) entraînés respectifs.

6. Engin de chantier (1) selon l'une des revendications 1 à 5, **caractérisé en ce que** les servomoteurs hydrauliques (72) sont des moteurs à piston axial hydrauliquement ajustables.

7. Engin de chantier (1) selon l'une des revendications 1 à 6, **caractérisé en ce que** la pompe hydraulique (78) est une pompe hydraulique à piston axial.

8. Engin de chantier (1) selon l'une des revendications 1 à 7, **caractérisé en ce que** le moteur hydraulique à cylindrée constante (74) est un moteur à piston axial non ajustable.

9. Engin de chantier (1) selon l'une des revendications 1 à 8, **caractérisé en ce que** le dispositif de déplacement pivotant (16) est orientable autour d'un axe de direction et l'axe de pivot vertical (40, 41) est décalé par rapport à l'axe d'articulation.

10. Engin de chantier (1) selon l'une des revendications 1 à 9, **caractérisé en ce que** le dispositif de travail (20) sur un côté du châssis de machine (8), à savoir celui appelé côté zéro (24) du châssis de machine (8), rejoint celui-ci en affleurement, dans lequel le dispositif de déplacement pivotant (16) est disposé sur ce côté zéro (24) du châssis de machine (8), dans lequel le dispositif de déplacement pivotant (16) peut pivoter entre la première position rétractée et ne saillant pas par rapport au côté zéro (24) et au moins une deuxième position déployée et saillant par rapport au côté zéro (24) .

11. Procédé de traitement de revêtements de sol avec un engin de chantier (1) automoteur à l'aide d'au moins trois dispositifs de déplacement (12, 16), doté d'un châssis de machine (8), en particulier une fraiseuse routière, pour lequel un dispositif de travail (20), en particulier un tambour de fraisage, traite le revêtement de sol (3) et pour lequel au moins un des trois dispositifs de déplacement (12, 16) est réalisé comme dispositif de déplacement pivotant (16), lequel peut être pivoté autour d'au moins un axe de pivot vertical par rapport au châssis de machine (8) entre une première position rétractée et au moins une deuxième position déployée, dans lequel au moins deux dispositifs de déplacement sont entraînés par un système d'entraînement hydraulique (70), dans lequel le système d'entraînement hydraulique (70) comporte au moins une pompe hydraulique (78) et dans lequel au moins un des au moins deux dispositifs de déplacement entraînés est le dispositif de déplacement pivotant (16),
dans lequel tous les dispositifs de déplacement entraînés (12) à l'exception de l'au moins un dispositif de déplacement pivotant (16) sont respectivement entraînés par le biais d'au moins un servo-moteur hydraulique (72) et l'au moins un dispositif de déplacement pivotant (16) est entraîné par le biais d'un moteur hydraulique à cylindrée constante (74),
**caractérisé**
**en ce que** le moteur hydraulique à cylindrée constante (74) est commandé par le biais d'une vanne régulable (76), dans lequel la vanne régulable est une vanne d'étranglement ou une vanne régulatrice de débit.

12. Procédé selon la revendication 11, **caractérisé en ce que** la vanne régulable (76) est disposée sur le châssis de machine (8).
